Europäisches Patentamt

European Patent Office

Office européen des brevets

(19)

(11) **EP 1 123 617 B1**

(12) **EUROPÄISCHE PATENTSCHRIFT**

(45) Veröffentlichungstag und Bekanntmachung des Hinweises auf die Patenterteilung:
**10.05.2006 Patentblatt 2006/19**

(21) Anmeldenummer: **99959221.5**

(22) Anmeldetag: **21.10.1999**

(51) Int Cl.:
***H04M 1/76*** (2006.01)

(86) Internationale Anmeldenummer:
**PCT/DE1999/003385**

(87) Internationale Veröffentlichungsnummer:
**WO 2000/024181 (27.04.2000 Gazette 2000/17)**

(54) **SCHALTUNGSANORDNUNG ZUR ELEKTRONISCHEN ERZEUGUNG EINER RUFIMPEDANZ**

CIRCUIT FOR ELECTRONICALLY GENERATING A CALL IMPEDANCE

CIRCUIT POUR PRODUIRE ELECTRONIQUEMENT UNE IMPEDANCE D'APPEL

(84) Benannte Vertragsstaaten:
**AT DE FR GB IT**

(30) Priorität: **21.10.1998 DE 19848606**
**18.12.1998 DE 19858761**

(43) Veröffentlichungstag der Anmeldung:
**16.08.2001 Patentblatt 2001/33**

(73) Patentinhaber: **Infineon Technologies AG**
**81669 München (DE)**

(72) Erfinder:
• **HAUPTMANN, Jörg**
**A-9241 Wernberg (AT)**

• **KAHL, Alexander**
**A-9500 Villach (AT)**

(74) Vertreter: **Barth, Stephan Manuel**
**Reinhard-Skuhra-Weise & Partner GbR,**
**Patentanwälte**
**Friedrichstrasse 31**
**80801 München (DE)**

(56) Entgegenhaltungen:
**US-A- 5 271 059    US-A- 5 485 516**
**US-A- 5 796 815**

EP 1 123 617 B1

**Beschreibung**

Die vorliegende Erfindung betrifft eine Schaltungsanordnung gemäß dem Oberbegriff des Patentanspruchs 1, wie aus der US 5,485,516 bekannt.

In analogen Telekommunikationssystemen wird zur Benachrichtigung eines Teilnehmers über einen eingehenden Ruf ein Rufsignal an das Endgerät des Teilnehmers übertragen. Dieses Rufsignal wird durch eine sinusförmige Wechselspannung, die sogenannte Rufspannung oder Rufwechselspannung, dargestellt. Das gerufene Teilnehmerendgerät muß das Rufsignal erkennen und bei Bedarf auf das Rufsignal reagieren (beispielsweise Benachrichtigung des gerufenen Teilnehmers über Rufton oder Anschaltung an die Leitung). Teilnehmerendgeräte bilden zur Anpassung an die Telefonleitung Rufimpedanzen, die aufgrund der unterschiedlichen Aufbaus der Telefonnetze in verschiedenen Ländern unterschiedlichen Anforderungen genügen müssen. Für Deutschland können die Rufimpedanzanforderungen aus dem Anforderungskatalog der Bundespost BAPT 223 ZV5, Stand: 02.05.1994, Seite 12, Kapitel 2.6.1 Rufimpedanz, entnommen werden.

Üblicherweise sind Rufimpedanzen in Teilnehmerendgeräten aus einem Widerstand und einem Kondensator aufgebaut, wobei der Widerstand den resistiven und der Kondensator den kapazitiven Teil einer Rufimpedanz bilden. Die Werte des Widerstandes und Kondensators müssen dabei an die länderspezifischen Anforderungen, die bestimmte Werte für die Rufimpedanz vorschreiben, angepaßt sein. Diese Anforderungen bedingen einen länderspezifischen Aufbau der eTeilnehmerendgeräte. Nachteilig ist dabei der erhöhte Aufwand bei der Produktion von Teilnehmerendgeräten, da für jedes Land eine eigene Teilnehmerendgerätvariante hergestellt werden muß, die die Rufimpedanzanforderungen erfüllt.

Aus US 5,485,516 ist bekannt, die Leitungsimpedanz einer Telefonleitung über einen Transistor und eine diesen Transistor steuernde Regeleinrichtung an die Leitungsgegebenheiten, wie beispielsweise die Übertragungscharakteristik, anpaßbar zu machen. Die Rufimpedanz wird dabei jedoch mit einem Kondensator und Widerstand realisiert, wobei beide länderspezifisch angepaßt sind.

Der Erfindung liegt daher die technische Aufgabe zugrunde, eine Schaltungsanordnung der eingangs genannten Art bereitzustellen, bei der die Rufimpedanz schaltungstechnisch einfach und dennoch möglichst flexibel an die gegebenen Verhältnisse anpaßbar ist.

Erfindungsgemäß wird diese Aufgabe durch eine Schaltungsanordnung mit den Merkmalen von Patentanspruch 1 gelöst.

Demgemäß wird eine Schaltungsanordnung der eingangs genannten Art bereitgestellt, bei der eine Regeleinrichtung zur Einstellung der Impedanz vorgesehen ist, die die Rufimpedanz an die gegebenen Verhältnisse anpaßt, wobei die Regeleinrichtung ein programmierbares digitales Filter aufweist und wobei die Übertragungsfunktion des digitalen Filters durch Programmierung der Filterkoeffizienten des digitalen Filters einstellbar ist.

Vorteilhafte Ausgestaltungen der Schaltungsanordnung ergeben sich aus den jeweiligen Unteransprüchen.

Durch die erfindungsgemäße Regeleinrichtung ist die Rufimpedanz programmierbar und damit anpaßbar an die jeweils gewünschten Gegebenheiten, wie zum Beispiel an die unterschiedlichsten länderspezifischen Anforderungen. Die Regeleinrichtung weist zu diesem Zwecke ein, beispielsweise über eine programmgesteuerte Einheit, programmierbares digitales Filter auf. Die Übertragungsfunktion des digitalen Filters und damit die Rufimpedanz sind durch Programmierung der Filterkoeffizienten des digitalen Filters einstellbar ist. In einer vorteilhaften Ausführungsform ist die programmgesteuerte Einheit als bekannter Mikroprozessor, wie zum Beispiel einem digitalen Signalprozessor (DSP), ausgebildet. In einer besonders bevorzugten Ausführungsform ist das digitale Filter in Form eines Programms in dem digitalen Signalprozessor implementiert.

Insbesondere bei der Produktion von Teilnehmerendgeräten ergeben sich dadurch Vorteile, da der Aufbau eines Teilnehmerendgerätes einheitlich ist und nur durch Einstellen der Übertragungsfunktion der Regeleinrichtung festgelegt wird, in welchen Land das Teilnehmerendgerät benutzt werden kann.

In einer bevorzugten Ausgestaltung wird die Schaltungsanordnung die Rufimpedanz durch einen Kondensator, der zwischen einem ersten Anschluß für eine Zweidrahtleitung und einem Gleichrichter geschaltet ist, und einen Transistor, dessen Laststrecke zwischen einem ersten Ausgang des Gleichrichters und einem Bezugspotential geschaltet ist, gebildet. Der Transistor wird von einer Regeleinrichtung gesteuert, wobei die Übertragungsfunktion des digitalen Filters zur Anpassung der Rufimpedanz an länderspezifische Anforderungen einstellbar ist. Insbesondere bei der Produktion von Teilnehmerendgeräten ergeben sich Vorteile, da der Aufbau eines Teilnehmerendgerätes einheitlich ist und nur durch Einstellen der Übertragungsfunktion der Regeleinrichtung festgelegt wird, in welchen Land das Teilnehmerendgerät benutzt werden kann.

Dem digitalen Filter ist eine digitale Wechselrichterschaltung in einer bevorzugten Ausführungsform vorgeschaltet. In einer weiteren bevorzugten Ausführungsform ist dem digitalen Filter eine digitale Gleichrichterschaltung nachgeschaltet.

Die Regeleinrichtung weist eine dem Transistor vorgeschaltete analoge Integratorschaltung in einer bevorzugten Ausführungsform auf, die die Differenz aus einer ersten und einer zweiten Eingangsspannung integriert und deren Ausgangssignal den Transistor steuert.

In einer weiteren bevorzugten Ausführungsform teilt ein Spannungsteiler die am ersten Ausgang des Gleichrichters anliegende Spannung auf eine kleinere Spannung.

In einer besonders bevorzugten Ausführungsform sind die digitale Wechselrichterschaltung sowie das digitale Filter und die digitale Gleichrichterschaltung auf einem digitalen Baustein integriert.

In einer bevorzugten Ausführungsform sind der Analog-Digital-Umsetzer, der Digital-Analog-Umsetzer und die analoge Integratorschaltung auf einem analogen Baustein integriert.

In einer weiteren bevorzugten Ausführungsform weist die Regeleinrichtung eine dem Steueranschluß des ersten Transistors vorgeschaltete erste analoge Integratorschaltung, die die Differenz aus einer ersten und einer zweiten Eingangsspannung integriert und deren Ausgangssignal den ersten Transistor steuert, und eine dem Steueranschluß des zweiten Transistors vorgeschaltete zweite analoge Integratorschaltung, die die Differenz aus einer dritten und einer vierten Eingangsspannung integriert und deren Ausgangssignal den zweiten Transistor steuert, auf. Vorteilhafterweise kommt diese Schaltungsanordnung ganz ohne Gleichrichterschaltung zur Gleichrichtung der Rufwechselspannung aus.

Bevorzugt teilt ein erster Spannungsteiler das erste Potential der Rufwechselspannung und ein zweiter Spannungsteiler das zweite Potential der Rufwechselspannung.

In einer bevorzugten Ausführungsform sind ein erster und ein zweiter Analog-Digital-Umsetzer, ein erster und ein zweiter Digital-Analog-Umsetzer und die erste und zweite analoge Integratorschaltung auf einem analogen Baustein integriert.

In einer bevorzugten Ausführungsform sind die Transistoren als n-Kanal-MOSFET ausgeführt.

Weitere Vorteilhafte Ausgestaltungen und Weiterbildungen der Erfindung sind den Unteransprüchen, der folgenden Beschreibung und den Figuren entnehmbar.

Die Erfindung wird nachfolgend anhand eines in den Figuren der Zeichnung angegebenen, vorteilhaften Ausführungsbeispiels näher erläutert. Es zeigt dabei:

Fig.1    ein erstes Ausführungsbeispiel einer Schaltungsanordnung zur elektronischen Erzeugung einer Rufimpedanz;

Fig.2    ein Zeitdiagramm mit einem digitalen Eingangssignal und dem daraus berechneten digitalen Ausgangssignal einer digitalen Wechselrichterschaltung;

Fig.3    eine spannungsgesteuerte Stromquelle zur Einstellung des Leitungsstroms gemäß Figur 1;

Fig.4    ein zweites Ausführungsbeispiel einer Schaltungsanordnung zur elektronischen Erzeugung einer Rufimpedanz;

Fig.5    zwei spannungsgesteuerte Stromquellen zur Einstellung eines ersten und zweiten Leitungsstroms gemäß Figur 4.

In allen Figuren der Zeichnung sind gleiche oder funktionsgleiche Elemente und Signale mit gleichen Bezugszeichen versehen.

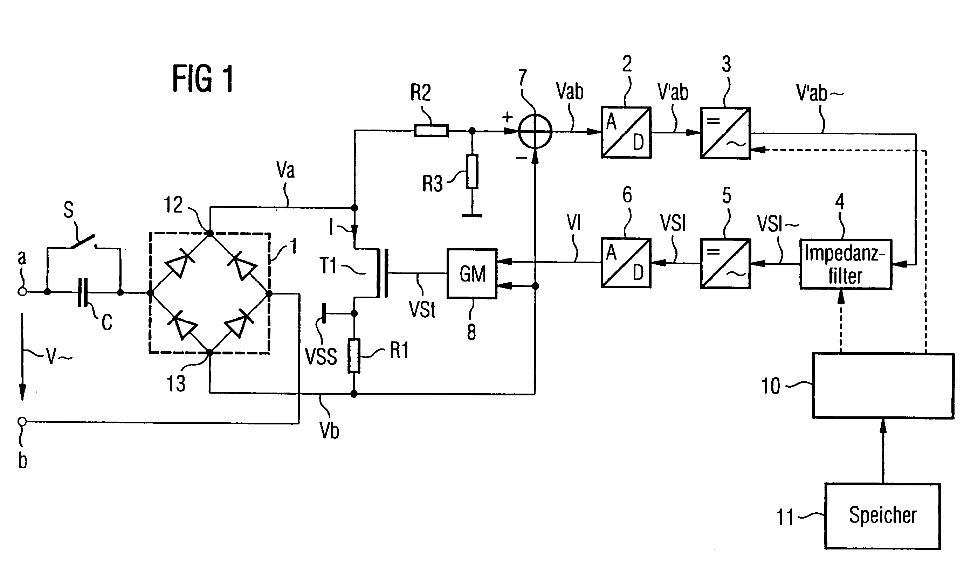

Die in Fig.1 dargestellte Schaltungsanordnung zur elektronischen Erzeugung einer Rufimpedanz weist zwei Anschlüsse a und b auf, die mit einer Zweidrahtleitung eines Telefonnetzes verbindbar sind. Über die Zweidrahtleitung sind Rufsignale von einem anderen Teilnehmer empfangbar, wobei die Rufsignale durch eine sinusförmige Wechselspannung V- der Frequenz fR erzeugt werden. Im folgenden wird diese Wechselspannung Rufwechselspannung genannt. Der Schalter S, der dem Gabelschalter (Hook switch) entspricht, ist offen, so daß Gleichsignalanteile in dem Rufsignal durch eine Kondensator C abgeblockt werden.

Der Kondensator C bildet gleichzeitig einen kapazitiven Teil der Rufimpedanz. Nach dem Kondensator C ist ein Brükkengleichrichter 1 geschaltet, der die Rufwechselspannung gleichrichtet. Aus der gleichgerichteten Rufwechselspannung werden nachfolgende Schaltungen mit Spannung versorgt. Weiterhin wird durch die gleichgerichtete Rufwechselspannung die Einstellung des Leitungsstroms I, der zur Einstellung der Rufimpedanz dient, sichergestellt. An einem ersten 12 und einem zweiten 13 Ausgang des Brückengleichrichters 1 liegt eine gleichgerichtete positive Va bzw. negative Vb Rufwechselspannung an. Die gleichgerichtete positive Va als auch negative Vb Rufwechselspannung sind auf ein Bezugspotential VSS bezogen, wobei die Amplitude der gleichgerichteten positiven Rufwechselspannung Va sehr viel größer als die Amplitude der gleichgerichteten negativen Rufwechselspannung Vb ist.

Der erste 12 und zweite 13 Ausgang des Brückengleichrichters 1 sind über einen Transistor T1 bzw. einen Widerstand R1 mit dem Bezugspotential VSS verbunden. Der Transistor T1 bildet in Kombination mit dem Kondensator C die Rufimpedanz. Die Rufimpedanz ist über eine Steuerung des Widerstandes des Transistors T1 an die verschiedenen länderspezifischen Anforderungen anpaßbar. Dazu wird aus der gleichgerichteten positiven Rufwechselspannung Va und negativen Rufwechselspannung Vb eine Steuerspannung VSt für den Transistor T1 mithilfe einer digitalen Regeleinrichtung abgeleitet.

Die gleichgerichtete positive Rufwechselspannung Va, die hohe Spannungswerte aufweist, wird über einen Spannungsteiler R2 und R3 auf eine kleinere Spannung geteilt, um von den nachfolgenden Schaltungen, in denen Signale im Verhältnis zur gleichgerichteten positiven Rufwechselspannung nur niedrige Spannungspegel aufweisen, verarbeitet zu werden.

Die spannungsgeteilte positive Rufwechselspannung Va und die negative Rufwechselspannung Vb werden einer Subtrahiererschaltung 7 zugeführt, an deren Ausgang eine Differenzspannung Vab anliegt.

Die Differenzspannung Vab wird anschließend von einem ersten Analog-Digital-Umsetzer 2 mit einer Abtastrate fs abgetastet und in ein digitales Signal V'ab gewandelt.

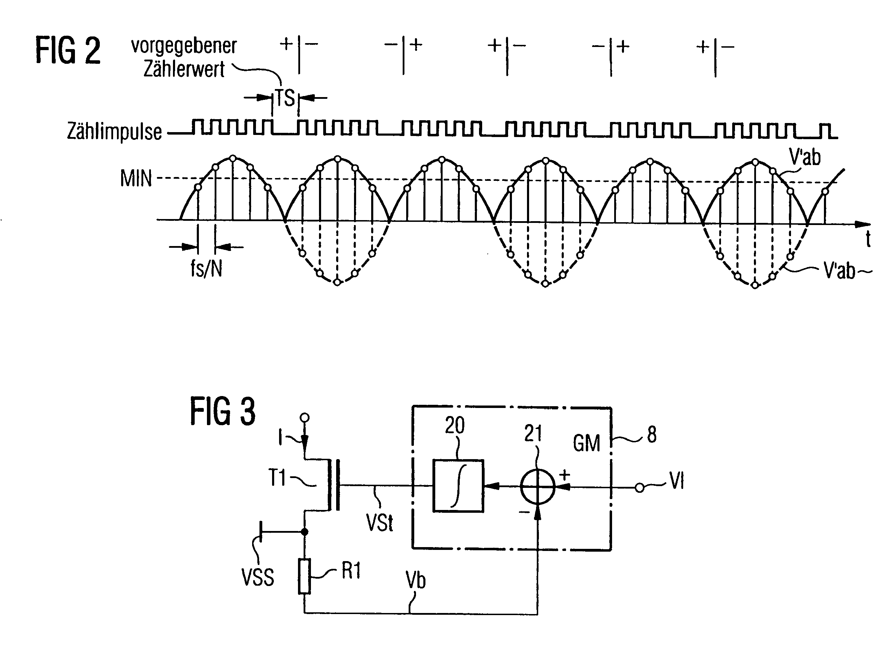

Das digitale Signal V'ab wird einer ersten digitalen Wechselrichterschaltung 3 zugeführt. In Figur 2 ist ein Zeitdiagramm mit dem digitalen Eingangs- und Ausgangssignal der digitalen Wechselrichterschaltung dargestellt. Unterschreiten die digitalen Werte V'ab am Eingang der ersten digitalen Wechselrichterschaltung 3 einen unteren vorgebbaren Schwellwert MIN, beginnt ein Zähler mit der Abtastrate fs/N des digitalen Signals zu zählen. Überschreitet der Zählerstand einen vorgebbaren Wert, der entsprechend der Frequenz der Rufwechselspannung von einer digitalen Steuereinrichtung 10 einstellbar ist, werden nach Ablauf einer Wartezeit TS die digitalen Werte am Ausgang V'ab~ der ersten digitalen Wechselrichterschaltung 3 durch Vorzeichenumkehr invertiert. Während der Wartezeit TS bleibt der Zähler zurückgesetzt und beginnt erst wieder zu zählen, wenn die digitalen Werte V'ab am Eingang den Schwellenwert MIN unterschreiten. Somit wird aus dem digitalen Eingangssignal, das eine gleichgerichtete Sinusschwingung - die Rufwechselspannung bezogen auf das Bezugspotential VSS - darstellt, ein digitales Ausgangssignal erzeugt, das eine erste auf das Bezugspotential VSS bezogene Rufwechselspannung darstellt.

Das digitale Ausgangssignal der digitalen Wechselrichterschaltung 3 wird einem digitalen Filters 4 zugeführt. Das digitale Filter 4 ist zur Anpassung an länderspezifische Anforderungen über eine digitale Steuereinrichtung 10 programmierbar, um die Rufimpedanz anpassen zu können, und weist dazu eine programmierbare Übertragungsfunktion k auf. Aus dem Eingangssignal V'ab~ wird dazu die für die Rufimpedanz erforderliche Phasenverschiebung und Verstärkung durch das digitale Filter 4 berechnet. Dabei kann das digitale Filter 4 als digitales Hardwarefilter ausgeführt sein, bei dem die Koeffizienten programmierbar sind. Ebenso kann das digitale Filter als Signalverarbeitungsalgorithmus auf einem digitalen Signalprozessor ausgeführt sein, wobei durch Variablen die Filterfunktion für verschiedene Rufimpedanzen einstellbar ist.

Eine digitale Gleichrichterschaltung 5 richtet das digitale Ausgangssignal des digitalen Filters 4 VSI- durch Betragsbildung gleich.

Das Ausgangssignal VSI der digitalen Gleichrichterschaltung 5 wird von einem Digital-Analog-Umsetzer 6 in ein analoges Signal VI gewandelt.

Das analoge Signal VI wird einem ersten Eingang einer analogen Integratorschaltung 8 zugeführt. Über einen zweiten Eingang wird der analogen Integratorschaltung 8 die negative Rufwechselspannung Vb, die dem Leitungsstrom proportional ist, zugeführt. Aus beiden Eingangssignalen wird in der analogen Integratorschaltung 8 eine Differenz gebildet, die anschließend integriert wird. Das Ausgangssignal VSt der analogen Integratorschaltung 8 wird an den Steueranschluß des Transistors T1 geführt. Der Transistor T1 wird über die zugeführte Spannung VSt eingestellt.

In Figur 3 ist die Einstellbarkeit des Leitungsstromes I durch den Transistor T1 dargestellt. Das analoge Signal VI der digitalen Regeleinrichtung und die negative Rufwechselspannung Vb, die dem Leitungsstrom proportional ist, werden einer Subtrahiererschaltung 21 zugeführt, an deren Ausgang die Differenzspannung VI - Vb anliegt. Die Differenzspannung VI - Vb wird von einer Integratorschaltung 20 integriert. Am Ausgang der Integratorschaltung 20 liegt die Spannung VSt an, die an den Steueranschluß der Transistors T1 geführt wird. Über den Transistor T1 wird der Leitungsstrom I eingestellt. Die Integratorschaltung 20 integriert die Differenzspannung VI - Vb so lange, bis die Differenzspannung VI - Vb = 0 wird. Daraus läßt sich mit Vb = R1*I = VI ein Leitwert GM = I/VI = 1/R1 ableiten:

Der Leitungstrom I wird damit über das analoge Signal VI der digitalen Regeleinrichtung so gesteuert, daß sich die erforderliche Rufimpedanz Z bei einer Differenzspannung Vab aus dem Verstärkungsfaktor ksense des Spannungsteilers R2 und R3, der Übertragungsfunktion k des digitalen Filters 4 und dem Leitwert GM der analogen Integratorschaltung berechnet:

$$Z = \frac{Vab}{I} = \frac{1}{ksense \cdot k \cdot GM} = \frac{R1}{ksense \cdot k} = f(k)$$

Der Leitungsstrom I ist somit durch den Transistor T1 einstellbar. Der Transistor T1 läßt sich wiederum durch die programmierbare Übertragungsfunktion k des digitalen Filters 4 einstellen. Somit hängt die Rufimpedanz von der programmierbaren Übertragungsfunktion k des digitalen Filters 4 ab und ist durch einfaches Umprogrammieren der Übertragungsfunktion k des digitalen Filters 4 an verschiedene länderspezifische Anforderungen anpaßbar. Dazu können beispielsweise in einem Speicher 11 länderspezifische Werte für die Rufimpedanz abgelegt sein. Die digitale Steuereinrichtung 10 liest aus dem Speicher 11 die zur Programmierung einer landesspezifischen Rufimpedanz erforderlichen Werte aus dem Speicher 11, programmiert das digitale Filter 4 dementsprechend um und stellt den digitalen Wechselrichter 3 auf die Frequenz fR der Rufwechselspannung ein.

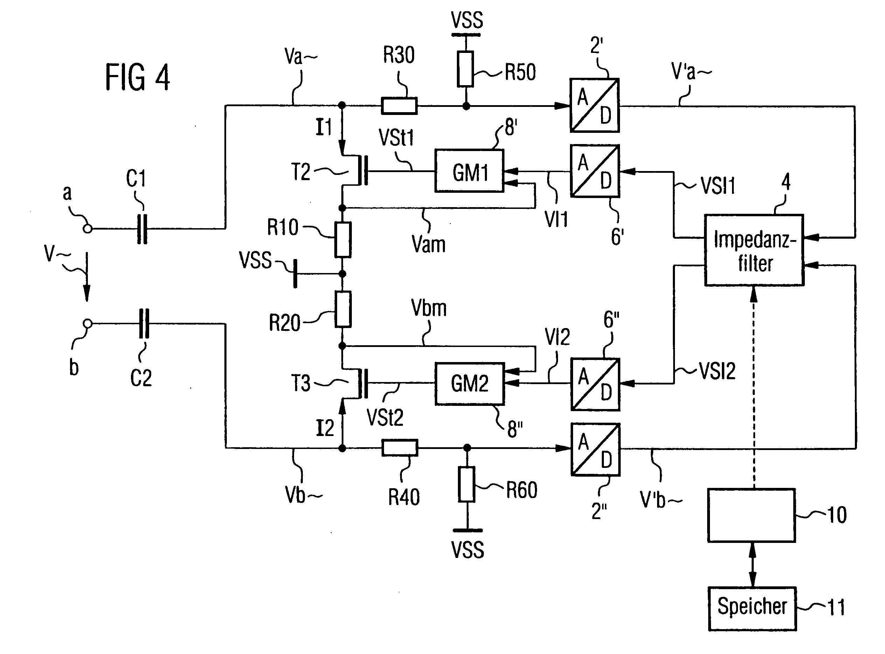

Die in Fig.4 dargestellte Schaltungsanordnung zur elektronischen Erzeugung einer Rufimpedanz weist einen ersten Anschluß a und einen zweiten Anschluß b auf, die mit einer zweiadrigen Teilnehmerleitung verbindbar sind. Über die Zweidrahtleitung sind Rufsignale empfangbar, wobei die Rufsignale durch eine sinusförmige Wechselspannung V~ mit einer Frequenz fR erzeugt werden. Gleichsignalanteile in dem Rufsignal werden durch einen ersten Kondensator C1 und einen zweiten Kondensator C2 abgeblockt.

Der erste Kondensator C1 und der zweiten Kondensator C2 bilden ferner einen kapazitiven Teil einer Rufimpedanz.

Für die positive Halbwelle der Rufwechselspannung V- ist eine erste Reihenschaltung des ersten Kondensators C1, der Laststrecke eines ersten Transistors T2 und eines ersten Widerstands R10 vorgesehen. Die Reihenschaltung verbindet den ersten Anschluß a mit einem Bezugspotential VSS. Am Verbindungspunkt des ersten Kondensators C1 und der ersten Transistors T2 ist ein erstes Potential Va- der Rufwechselspannung V- abgreifbar.

Für die negative Halbwelle der Rufwechselspannung V- ist eine zweite Reihenschaltung des zweiten Kondensators C2, der Laststrecke eines zweiten Transistors T3 und eines zweiten Widerstands R20 vorgesehen. Die Reihenschaltung verbindet den zweiten Anschluß b mit dem Bezugspotential VSS. Ein zweites Potential Vb~ der Rufwechselspannung V- ist am Verbindungspunkt des zweiten Kondensators C2 und des zweiten Transistors T3 abgreifbar.

Die Rufimpedanz wird jeweils für die positive bzw. negative Halbwelle der Rufwechselspannung V- von dem ersten Kondensator C1 und dem ersten Transistor T2 bzw. dem zweiten Kondensator C2 und dem zweiten Transistor T3 gebildet. Dazu wird ein erster Leitungsstrom I1 und ein zweiter Leitungsstrom I2 jeweils in der ersten bzw. zweiten Reihenschaltung eingestellt.

Für die positive Halbwelle wird der zweite Transistor T3 niederohmig geschaltet, so daß die zweite Reihenschaltung zwischen dem zweiten Anschluß b und dem Bezugspotential VSS niederohmig ist. Für die negative Halbwelle wird der erste Transistor T2 niederohmig geschaltet, so daß die erste Reihenschaltung zwischen dem ersten Anschluß a und dem Bezugspotential VSS niederohmig ist.

Das erste Potential Va- (positive Halbwelle) wird durch einen ersten Spannungsteiler R30 und R50 auf eine kleinere Spannung geteilt, die von einem ersten Analog-Digital-Umsetzer 2' in ein erstes digitales Signal V'a- umgesetzt wird.

Das zweite Potential Vb- (negative Halbwelle) wird durch einen zweiten Spannungsteiler R40 und R60 auf eine kleinere Spannung geteilt, die von einem zweiten Analog-Digital-Umsetzer 2' in ein zweites digitales Signal V'b- umgesetzt wird.

Das erste digitale Signal V'a~ und das zweite digitale Signal V'b- werden einem digitalen Filter 4 (Impedanzfilter) zugeführt.

Das digitale Filter 4 wird von einer Steuereinheit 10 - beispielsweise einem Mikroprozessor - , die mit einem Speicher 11 verbunden ist, programmiert. Die Programmierung des digitalen Filters 4 dient dabei zur Einstellung länderspezifischer Parameter der Rufimpedanz. Dazu können verschiedene länderspezifische Daten in dem Speicher 11 abgelegt sein. Je nach Einsatzgebiet der Schaltungsanordnung werden von der Steuereinheit 10 länderspezifische Daten aus dem Speicher 11 gelesen und das digitale Filter 4 entsprechend programmiert.

Das digitale Filter 4 erzeugt ein erstes digitales Ausgangssignal VSI1 und ein zweites digitales Ausgangssignal VSI2.

Das erste digitale Ausgangssignal VSI1 wird von einem ersten Digital-Analog-Umsetzer 6' in ein erstes Eingangssignal VI1 für eine erste analoge Integratorschaltung 8' umgesetzt.

Parallel wird das zweite digitale Ausgangssignal VSI2 von einem zweiten Digital-Analog-Umsetzer 6" in ein zweiten Eingangssignal VI2 für eine zweite analoge Integratorschaltung 8" umgesetzt.

Die erste analoge Integratorschaltung 8' integriert die Differenz des ersten Eingangssignals VI1 und eines zweiten Eingangssignals Vam, das an dem Verbindungspunkt der Laststrecke des ersten Transistors T2 und des ersten Widerstands R10 abgegriffen wird. Das zweite Eingangssignal Vam = R10*I1 hängt dabei von dem ersten Leitungsstrom I1 ab.

Parallel integriert die zweite analoge Integratorschaltung 8" die Differenz des ersten Eingangssignals VI2 und eines zweiten Eingangssignals Vbm, das an dem Verbindungspunkt der Laststrecke des zweiten Transistors T3 und des zweiten Widerstands R20 abgegriffen wird. Das zweite Eingangssignal Vbm = R20*I2 hängt dabei von dem zweiten Leitungsstrom I2 ab.

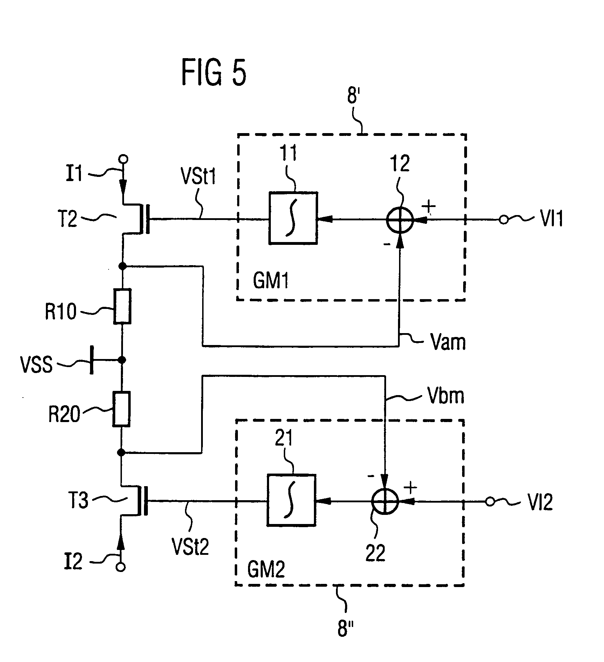

In Figur 5 ist der Aufbau der ersten und zweiten analogen Integratorschaltung und die Einstellbarkeit des ersten Leitungsstroms I1 und des zweiten Leitungsstroms I2 durch den ersten Transistor T2 bzw. den zweiten Transistor T3 dargestellt.

Das erste analoge Steuersignal VI1 und das Potential Vam, das an dem Verbindungspunkt der Laststrecke des ersten Transistors T2 und des ersten Widerstands R10 abgegriffen wird, werden einer ersten Subtrahiererschaltung 12 zugeführt, an deren Ausgang eine Differenzspannung VI1 - Vam anliegt. Die Differenzspannung VI1 - Vam wird von einer ersten Integratorschaltung 11 integriert. Am Ausgang der ersten Integratorschaltung 11 liegt eine Spannung VSt1 an, die an den Steueranschluß des ersten Transistors T2 geführt wird. Über den ersten Transistor T2 wird der erste Leitungsstrom I1 eingestellt. Die erste Integratorschaltung 11 integriert die Differenzspannung VI1 - Vam so lange, bis die Differenzspannung VI1 - Vam = 0 wird. Daraus läßt sich mit Vam = R10*I1 = VI1 ein Leitwert GM1 = I1/VI1 = 1/R10 ableiten.

Der erste Leitungstrom I1 wird damit über das erste analoge Signal VI1 der digitalen Regeleinrichtung so gesteuert, daß sich die erforderliche Rufimpedanz Z1 bei einer positiven Halbwelle der Rufwechselspannung V- aus dem Verstärkungsfaktor ksense1 des ersten Spannungsteilers R30 und R50, einer ersten Übertragungsfunktion k1 des digitalen Filters 4 und dem Leitwert GM1 der ersten analogen Integratorschaltung 8' berechnet:

$$Z1 = \frac{Va \sim}{I1} = \frac{1}{ksense1 \cdot k1 \cdot GM1} = \frac{R10}{ksense1 \cdot k1} = f_1(k1)$$

Der erste Leitungsstrom I1 ist somit durch den ersten Transistor T2 einstellbar. Der erste Transistor T2 läßt sich wiederum durch die programmierbare erste Übertragungsfunktion k1 des digitalen Filters 4 einstellen. Somit hängt die Rufimpedanz von der programmierbaren ersten Übertragungsfunktion k1 des digitalen Filters 4 ab und ist durch einfaches Umprogrammieren der ersten Übertragungsfunktion k1 des digitalen Filters 4 an verschiedene länderspezifische Anforderungen anpaßbar. Dazu können beispielsweise in dem Speicher 11 länderspezifische Werte für die Rufimpedanz abgelegt sein. Die Steuereinrichtung 10 liest aus dem Speicher 11 die zur Programmierung einer landesspezifischen Rufimpedanz erforderlichen Werte und programmiert die erste Übertragungsfunktion k1 des digitalen Filters 4 dementsprechend um.

Das zweite analoge Steuersignal VI2 und das Potential Vbm, das an dem Verbindungspunkt der Laststrecke des zweiten Transistors T3 und des zweiten Widerstands R20 abgegriffen wird, werden einer zweiten Subtrahiererschaltung 22 zugeführt, an deren Ausgang eine Differenzspannung VI2 - Vbm anliegt. Die Differenzspannung VI2 - Vbm wird von einer zweiten Integratorschaltung 21 integriert. Am Ausgang der zweiten Integratorschaltung 21 liegt eine Spannung VSt2 an, die an den Steueranschluß des zweiten Transistors T3 geführt wird. Über den zweiten Transistor T3 wird der zweite Leitungsstrom I2 eingestellt. Die zweite Integratorschaltung 21 integriert die Differenzspannung VI2 - Vbm so lange, bis die Differenzspannung VI2 - Vbm = 0 wird. Daraus läßt sich mit Vbm = R20*I2 = VI2 ein Leitwert GM2 = I2/VI2 = 1/R20 ableiten.

Der zweite Leitungstrom I2 wird damit über das zweite analoge Signal VI2 der digitalen Regeleinrichtung so gesteuert, daß sich die erforderliche Rufimpedanz Z2 bei einer negativen Halbwelle der Rufwechselspannung V- aus dem Verstärkungsfaktor ksense2 des zweiten Spannungsteilers R40 und R60, einer zweiten Übertragungsfunktion k2 des digitalen Filters 4 und dem Leitwert GM2 der zweiten analogen Integratorschaltung 8" berechnet:

$$Z2 = \frac{Vb \sim}{I2} = \frac{1}{ksense2 \cdot k2 \cdot GM2} = \frac{R20}{ksense2 \cdot k2} = f_2(k2)$$

Der zweite Leitungsstrom I2 ist somit durch den zweiten Transistor T3 einstellbar. Der zweite Transistor T3 läßt sich wiederum durch die programmierbare zweite Übertragungsfunktion k2 des digitalen Filters 4 einstellen. Somit hängt die Rufimpedanz von der programmierbaren zweiten Übertragungsfunktion k2 des digitalen Filters 4 ab und ist durch einfaches Umprogrammieren der zweiten Übertragungsfunktion k2 des digitalen Filters 4 an verschiedene länderspezifische Anforderungen anpaßbar. Die Umprogrammierung der zweiten Übertragungsfunktion k2 erfolgt dabei analog der Umprogrammierung der ersten Übertragungsfunktion k1.

Die erste Übertragungsfunktion k1 und die zweite Übertragungsfunktion k2 sind vorzugsweise gleich, damit sich sowohl für eine positive als auch negative Halbwelle der Rufwechselspannung V~ jeweils die gleiche Rufimpedanz $Z_{gesamt}$ einstellt. Dies setzt selbstverständlich gleiche Leitwerte GM1 und GM2 der ersten 8' und zweiten 8" analogen Integratorschaltung und gleiche Spannungsteilerverhältnisse des ersten und zweiten Spannungsteilers voraus. Damit ergibt sich mit GM1 = GM2 und ksense1 = ksense2 die Rufimpedanz $Z_{gesamt}$:

EP 1 123 617 B1

$$Z_{gesamt} = Z1 = Z2.$$

Mit der erfindungsgemäßen Schaltungsanordnung ist jedoch auch eine unsymmetrische Rufimpedanz einstellbar, die für die positive Halbwelle der Rufwechselspannung V- eine andere Rufimpedanz Z1 als für die negative Halbwelle der Rufwechselspannung V- aufweist.

**Patentansprüche**

1. Schaltungsanordnung zur elektronischen Erzeugung einer Rufimpedanz in Telefonendgeräten mittels mindestens eines Transistors (T1; T2, T3) und mindestens, eines Kondensators (C; C1, C2), wobei die Rufimpedanz über eine Steuerung des Widerstandes des mindestens einen Transistors anpaßbar ist, mit einer zwischen einem ersten (a) und einem zweiten (b) Eingangsanschluß abgreifbaren Rufwechselspannung (V~),
**dadurch gekennzeichnet, daß**
eine digitale Regeleinrichtung (2, 4, 8; 2', 2'', 4, 8', 8'') zur Einstellung der Rufimpedanz vorgesehen ist, die die Rufimpedanz an die gegebenen Verhältnisse anpaßt, indem sie aus der Rufwechselspannung (V~) mindestens eine Steuerspannung (VSt, VSt1, VSt2) zur Steuerung des mindestens einen Transistors (T1, T2, T3) erzeugt, die digitale Regeleinrichtung (2, 4, 8; 2', 2'', 4, 8', 8'') ein programmierbares digitales Filter (4) aufweist, und die Übertragungsfunktion des digitalen Filters (4) durch Programmierung der zugehörigen Filterkoeffizienten einstellbar ist.

2. Schaltungsanordnung nach Anspruch 1,
**dadurch gekennzeichnet, daß**
das digitale Filter (4) Bestandteil eines programmierbaren digitalen Signalprozessors oder Mikroprozessors ist.

3. Schaltungsanordnung nach einem der Ansprüche 1 oder 2,
**dadurch gekennzeichnet, daß**
dem digitalen Filter (4) eine digitale Wechselrichterschaltung (3) vorgeschaltet ist und eine digitale Gleichrichterschaltung (5) nachgeschaltet ist.

4. Schaltungsanordnung nach einem der vorstehenden Ansprüche,
**gekennzeichnet durch**

- eine Gleichrichterschaltung (1) zur Gleichrichtung der Rufwechselspannung (V~),
- eine zwischen einem Eingangsanschluß (a) und Gleichrichterschaltung (1) geschalteten Kondensator (C),
- einen Transistor (T1), der über seine Laststrecke zwischen den Ausgängen (12, 13) der Gleichrichterschaltung (1) angeordnet ist,
- wobei der digitalen Regeleinrichtung (2, 4, 8) eine **durch** die Gleichrichterschaltung (1) aus der Rufwechselspannung (V~) gleichgerichtete erste und zweite Spannung (Va, Vb) zugeführt wird und
- wobei die digitale Regeleinrichtung (2, 4, 8) eine Steuerspannung (VSt) zur Ansteuerung des Transistors (T1) bereitstellt.

5. Schaltungsanordnung nach einem der vorstehenden Ansprüche,
**dadurch gekennzeichnet, daß**
die digitale Regeleinrichtung (2, 4, 8) eine dem Transistor (T1) vorgeschaltete analoge Integratorschaltung (8) aufweist, die ein aus der Differenz einer ersten (VI) und einer zweiten (Vb) Eingangsspannung integriertes Ausgangssignal (VSt) bereitstellt, das den Transistor (T1) ansteuert.

6. Schaltungsanordnung nach einem der vorstehenden Ansprüche,
**dadurch gekennzeichnet, daß**
ein Spannungsteiler (R2, R3) vorgesehen ist, der aus der an dem einen Ausgang (12) des Gleichrichterschaltung (1) anliegende Spannung (Va) eine Teilspannung bereitstellt.

7. Schaltungsanordnung nach Anspruch 3,
**dadurch gekennzeichnet, daß**

die digitale Wechselrichterschaltung (3), das digitale Filter (4) und die digitale Gleichrichterschaltung (5) zusammen auf einem digital ausgebildeten Halbleiterchip integriert sind.

**8.** Schaltungsanordnung nach einem der Ansprüche 3 bis 7,
**dadurch gekennzeichnet, daß**
ein Analog-Digital-Umsetzer (2) vorgesehen ist, der der digitalen Wechselrichterschaltung (3) vorgeschaltet ist, und ein Digital-Analog-Umsetzer (6) vorgesehen ist, der der digitalen Gleichrichterschaltung (5) nachgeschaltet ist, wobei der Analog-Digital-Umsetzer (2), der Digital-Analog-Umsetzer (6) und die analoge Integratorschaltung (8) zusammen auf einem analog ausgebildeten Halbleiterchip integriert sind.

**9.** Schaltungsanordnung nach Anspruch 1 oder 2,
**dadurch gekennzeichnet, daß**

- zwischen dem ersten Anschluß (a) und einem Bezugspotential (VSS) ein erster Kondensator (C1), die Laststrecke eines ersten Transistors (T2) und ein erster Widerstand (R10) in Reihe angeordnet sind,
- zwischen dem zweiten Anschluß (b) und dem Bezugspotential (VSS) ein zweiter Kondensator (C2), die Laststrecke eines zweiten Transistors (T3) und ein zweiter Widerstand (R20) in Reihe angeordnet sind,
- wobei der digitales Regeleinrichtung (2', 2'', 4, 8', 8'') ein erstes und ein zweites Eingangspotential (Va~) der Rufwechselspannung (V~) zugeführt wird und
- wobei die digitale Regeleinrichtung (2', 2'', 4, 8', 8'') eine erste Steuerspannung (VSt1) zur Ansteuerung des ersten Transistors (T2) und eine zweite Steuerspannung (VSt2) zur Ansteuerung des zweiten Transistors (T3) bereitstellt.

**10.** Schaltungsanordnung nach Anspruch 9,
**dadurch gekennzeichnet, daß**
die digitale Regeleinrichtung (2', 2'', 4, 8', 8'')

- eine dem ersten Transistor (T2) vorgeschaltete erste analoge Integratorschaltung (8') aufweist, die ein aus der Differenz einer ersten (VI1) und einer zweiten (Vam) Eingangsspannung integriertes Ausgangssignal (VSt1) bereitstellt, das den ersten Transistor (T2) ansteuert, und
- eine dem zweiten Transistor (T3) vorgeschaltete zweite analoge Integratorschaltung (8'') aufweist, die ein aus der Differenz einer dritten (VI2) und einer vierten (Vbm) Eingangsspannung integriertes Ausgangssignal (VSt2) bereitstellt, das den zweiten Transistor (T3) ansteuert.

**11.** Schaltungsanordnung nach Anspruch 9 oder 10,
**dadurch gekennzeichnet, daß**
ein erster Spannungsteiler (R30, R50) vorgesehen ist, der aus dem ersten Potential (Va~) der Rufwechselspannung (V~) eine erste Teilspannung bereitstellt, und
ein zweiter Spannungsteiler (R40, R60) vorgesehen ist, der aus dem zweiten Potential (Vb~) der Rufwechselspannung (V~) eine zweite Teilspannung bereitstellt.

**12.** Schaltungsanordnung nach Anspruch 10 oder 11,
**dadurch gekennzeichnet, daß**
mindestens ein Analog-Digital-Umsetzer (2', 2'') vorgesehen ist, der dem digitalen Filter (4) vorgeschaltet ist, und mindestens ein Digital-Analog-Umsetzer (6', 6'') vorgesehen ist, der der digitalen Gleichrichterschaltung (5) nachgeschaltet ist, wobei die Analog-Digital-Umsetzer (2', 2''), die Digital-Analog-Umsetzer (6', 6'') und die analogen Integratorschaltungen (8', 8'') zusammen auf einem analog ausgebildeten Halbleiterchip integriert sind.

**13.** Schaltungsanordnung nach einem der Ansprüche 4 bis 12,
**dadurch gekennzeichnet, daß**
die mindestens einer der Transistoren (T1; T2, T3) als n-Kanal-MOSFET ausgebildet ist.

**Claims**

**1.** Circuit arrangement for electronically generating a ringing impedance in telephone terminals by means of at least one transistor (T1; T2, T3) and at least one capacitor (C; C1, C2), the ringing impedance being adaptable by controlling the resistance of the at least one transistor, having a ringing alternating voltage (V-) which can be tapped between a first input terminal (a) and a second input terminal (b), **characterized in that** a digital controller (2, 4, 8; 2', 2'', 4, 8', 8'') is provided for setting the ringing impedance, said controller adapting the ringing impedance to the given conditions by generating from the ringing alternating voltage (V-) at least one control voltage (VSt, VSt1, VSt2) for controlling the at least one transistor (T1, T2, T3),

the digital controller (2, 4, 8, 2', 2'', 4, 8', 8'') has a programmable digital filter (4), and

the transmission function of the digital filter (4) can be set by programming the associated filter coefficients.

2. Circuit arrangement according to Claim 1, **characterized in that** the digital filter (4) is a component of a programmable digital signal processor or microprocessor.

3. Circuit arrangement according to one of Claims 1 or 2, **characterized in that** a digital power inverter circuit (3) is connected upstream of the digital filter (4) and a digital rectifier circuit (5) is connected downstream of the digital filter.

4. Circuit arrangement according to one of the preceding claims, **characterized by**

   - a rectifier circuit (1) for rectifying the ringing alternating voltage (V~),
   - a capacitor (C) which is connected between an input terminal (a) and rectifier circuit (1),
   - a transistor (T1) which is arranged by means of its load path between the outputs (12, 13) of the rectifier circuit (1),
   - a first and second voltage (Va, Vb), which are rectified from the ringing alternating voltage (V-) by means of the rectifier circuit (1), being fed to the digital controller (2, 4, 8), and
   - the digital controller (2, 4, 8) making available a control voltage (VSt) for driving the transistor (T1).

5. Circuit arrangement according to one of the preceding claims, **characterized in that** the digital controller (2, 4, 8) has an analogue integrator circuit (8) which is connected upstream of the transistor (T1) and which makes available an output signal (VSt) which is integrated from the difference between a first input voltage (VI) and a second input voltage (Vb) and which drives the transistor (T1).

6. Circuit arrangement according to one of the preceding claims, **characterized in that** a voltage divider (R2, R3) is provided which makes available a component voltage from the voltage (Va) which is present at the one output (12) of the rectifier circuit (1).

7. Circuit arrangement according to Claim 3, **characterized in that** the digital power inverter circuit (3), the digital filter (4) and the digital rectifier circuit (5) are together integrated on a semiconductor chip of digital design.

8. Circuit arrangement according to one of Claims 3 to 7, **characterized in that** an analogue/digital converter (2) is provided which is connected upstream of the digital power inverter circuit (3), and a digital/analogue converter (6) is provided which is connected downstream of the digital rectifier circuit (5), the analogue/digital converter (2), the digital/analogue converter (6) and the analogue integrator circuit (8) being together integrated on a semiconductor chip of analogue design.

9. Circuit arrangement according to Claim 1 or 2, **characterized in that**

   - a first capacitor (C1), the load path of a first transistor (T2) and a first resistor (R10) are arranged in series between the first terminal (a) and a reference potential (VSS),
   - a second capacitor (C2), the load path of a second transistor (T3) and a second resistor (R20) are arranged in series between the second terminal (b) and the reference potential (VSS),
   - a first and a second input potential (Va-) of the ringing alternating voltage (V-) being fed to the digital controller (2', 2'', 4, 8', 8''), and
   - the digital controller (2', 2'', 4, 8', 8'') making available a first control voltage (VSt1) for driving the first transistor (T2) and a second control voltage (VSt2) for driving the second transistor (T3).

10. Circuit arrangement according to Claim 9, **characterized in that** the digital controller (2', 2'', 4, 8', 8'')

    - has a first analogue integrator circuit (8') which is connected upstream of the first transistor (T2) and which makes available an output signal (VSt1) which is integrated from the difference between a first input voltage (VI1) and a second input voltage (Vam) and which drives the first transistor (T2), and
    - has a second analogue integrator circuit (8'') which is connected upstream of the second transistor (T3) and which makes available an output signal (VSt2) which is integrated from the difference between a third input voltage (VI2) and a fourth input voltage (Vbm) and which drives the second transistor (T3).

**11.** Circuit arrangement according to Claim 9 or 10, **characterized in that** a first voltage divider (R30, R50) is provided which makes available a first component voltage from the first potential (Va-) of the ringing alternating voltage (V-), and a second voltage divider (R40, R60) is provided which makes available a second component voltage from the second potential (Vb-) of the ringing alternating voltage (V~).

**12.** Circuit arrangement according to Claim 10 or 11, **characterized in that** at least one analogue/digital converter (2', 2"), which is connected upstream of the digital filter (4), is provided, and at least one digital/analogue converter (6', 6"), which is connected downstream of the digital rectifier circuit (5), is provided, the analogue/digital converters (2', 2''), the digital/analogue converters (6', 6'') and the analogue integrator circuits (8', 8'') being together integrated on a semiconductor chip of analogue design.

**13.** Circuit arrangement according to one of Claims 4 to 12, **characterized in that** at least one of the transistors (T1; T2, T3) is embodied as an n-channel-MOSFET.

**Revendications**

**1.** Circuit pour la génération électronique d'une impédance d'appel dans des terminaux téléphoniques au moyen d'au moins un transistor (T1 ; T2, T3) et d'au moins un condensateur (C ; C1, C2), l'impédance d'appel étant adaptable par une commande de la résistance du au moins un transistor, comprenant une tension alternative de sonnerie (V-) qui peut être prélevée entre une première (a) et une deuxième (b) connexion d'entrée,
**caractérisé en ce que**
on prévoit un dispositif de régulation numérique (2, 4, 8 ; 2', 2", 4, 8', 8") pour le réglage de l'impédance d'appel, qui adapte l'impédance d'appel aux conditions données, en générant à partir de la tension alternative de sonnerie (V-) au moins une tension de commande (VSt ; VSt1, VSt2) pour la commande du au moins un transistor (T1 ; T2, T3), le dispositif de régulation numérique (2, 4, 8 ; 2', 2", 4, 8', 8") comprend un filtre numérique programmable (4), et la fonction de transfert du filtre numérique (4) est réglable en programmant les coefficients de filtre correspondants.

**2.** Circuit selon la revendication 1,
**caractérisé en ce que**
le filtre numérique (4) est un élément d'un processeur de signal ou d'un microprocesseur numériques programmables.

**3.** Circuit selon une des revendications 1 ou 2,
**caractérisé en ce que**
un circuit onduleur numérique (3) est connecté en amont du filtre numérique (4) et un montage redresseur numérique (5) est connecté en aval du filtre numérique (4).

**4.** Circuit selon l'une quelconque des revendications précédentes,
**caractérisé par**

- un montage redresseur (1) pour le redressement de la tension alternative de sonnerie (V-),
- un condensateur (C) connecté entre une connexion d'entrée (a) et un montage redresseur (1),
- un transistor (T1) disposé via son chemin de charge entre les sorties (12, 13) du montage redresseur (1),
- une première et une deuxième tension (Va, Vb), redressées par le montage redresseur (1) à partir de la tension alternative de sonnerie (V-), étant envoyées au dispositif de régulation numérique (2, 4, 8)
- le dispositif de régulation numérique (2, 4, 8) mettant à disposition une tension de commande (VSt) pour le pilotage du transistor (T1).

**5.** Circuit selon l'une quelconque des revendications précédentes,
**caractérisé en ce que**
le dispositif de régulation numérique (2, 4, 8) comporte en amont du transistor (T1) un circuit intégrateur analogique (8) qui génère un signal de sortie (VSt) intégré à partir de la différence entre une première (VI) et une deuxième (Vb) tension d'entrée et qui pilote le transistor (T1).

**6.** Circuit selon l'une quelconque des revendications précédentes,
**caractérisé en ce que**

on prévoit un diviseur de tension (R2, R3) qui met à disposition une tension partielle à partir de la tension (Va) appliquée à une des sorties (12) du montage redresseur (1),

7. Circuit selon la revendication 3,
   **caractérisé en ce que**
   le circuit onduleur numérique (3), le filtre numérique (4) et le montage redresseur numérique (5) sont intégrés ensemble sur une puce semi-conducteur numérique.

8. Circuit selon l'une des revendications 3 à 7,
   **caractérisé en ce que**
   on prévoit un convertisseur analogique-numérique (2) connecté en amont du circuit onduleur numérique (3) et un convertisseur numérique-analogique (6) connecté en aval du montage redresseur numérique (5), le convertisseur analogique-numérique (2), le convertisseur numérique-analogique (6) et le circuit intégrateur analogique (8) étant intégrés ensemble sur une puce semi-conducteur analogique.

9. Circuit selon la revendication 1 ou 2,
   **caractérisé en ce que**

   - entre la première connexion (a) et un potentiel de référence (VSS), sont montés en série un premier condensateur (C1), le chemin de charge d'un premier transistor (T2) et une première résistance (R10),
   - entre la deuxième connexion (b) et le potentiel de référence (VSS), sont montés en série un deuxième condensateur (C2), le chemin de charge d'un deuxième transistor (T3) et une deuxième résistance (R20),
   - un premier et un deuxième potentiel d'entrée (Va~) de la tension alternative de sonnerie (V-) étant envoyés au dispositif de régulation numérique (2', 2", 4, 8', 8"),
   - le dispositif de régulation numérique (2', 2", 4, 8', 8") mettant à disposition une première tension de commande (VSt1) pour le pilotage du premier transistor (T2) et une deuxième tension de commande (VSt2) pour le pilotage du deuxième transistor (T3).

10. Circuit selon la revendication 9,
    **caractérisé en ce que**
    le dispositif de régulation numérique (2', 2", 4, 8', 8")

    - comporte, en amont du premier transistor (T2), un premier circuit intégrateur analogique (8'), qui génère un signal de sortie (VSt) intégré à partir de la différence entre une première (VI1) et une deuxième (Vam) tension d'entrée et qui pilote le premier transistor (T2), et
    - comporte, en amont du deuxième transistor (T3), un deuxième circuit intégrateur analogique (8"), qui génère un signal de sortie (VSt2) intégré à partir de la différence entre une troisième (VI2) et une quatrième (Vbm) tension d'entrée et qui pilote le deuxième transistor (T3).

11. Circuit selon la revendication 9 ou 10,
    **caractérisé en ce que**
    on prévoit un premier diviseur de tension (R30, R50), qui met à disposition une première tension partielle à partir du premier potentiel (Va~) de la tension alternative de sonnerie (V~), et
    un deuxième diviseur de tension (R40, R60), qui met à disposition une deuxième tension partielle à partir du deuxième potentiel (Vb-) de la tension alternative de sonnerie (V-).

12. Circuit selon la revendication 10 ou 11,
    **caractérisé en ce que**
    on prévoit au moins un convertisseur analogique-numérique (2',2") connecté en amont du filtre numérique (4), et au moins un convertisseur numérique-analogique (6', 6") connecté en aval du montage redresseur numérique (5), les convertisseurs analogique-numérique (2', 2"), les convertisseurs numérique-analogique (6', 6") et les circuits intégrateurs numériques (8', 8") étant intégrés ensemble sur une puce semi-conducteur analogique.

13. Circuit selon une des revendications 4 à 12,
    **caractérisé en ce que**
    au moins un des transistors (T1 ; T2, T3) est réalisé en MOSFET à canal n.

# FIG 1

**FIG 2**

vorgegebener
Zählerwert

Zählimpulse

TS

Zählimpulse

V'ab

V'ab

t

MIN

fs/N

**FIG 3**

GM  8

21

20

+

−

VSt

VI

I

T1

VSS

R1

Vb

# FIG 4

EP 1 123 617 B1

FIG 5